# EUROPEAN PATENT SPECIFICATION

(11) **EP 2 786 219 B1**
(45) Date of publication and mention of the grant of the patent: **13.05.2020**
(21) Application number: 11810912.3
(22) Date of filing: 20.12.2011
(51) Int. Cl.: G05D 23/19, F16K 31/04, F24D 19/10, F24H 9/20

(54) **HEAD OF A REMOTELY CONTROLLED CENTRAL HEATING RADIATOR VALVE**
KOPF EINES FERNGESTEUERTEN ZENTRALHEIZKÖRPERVENTILS
TÊTE DE VANNE DE RADIATEUR DE CHAUFFAGE CENTRAL COMMANDÉE À DISTANCE

(30) Priority: 28.11.2011 PL 39715411
(43) Date of publication of application: 08.10.2014
(73) Proprietor: SZYMANSKI, Andrzej, 64-320 Niepruszewo (PL)
(72) Inventor: SZYMANSKI, Andrzej, 60-446 Poznan (PL); BIGAJ, Zbigniew, 60 101 Poznan (PL)
(74) Representative: Gornicki, Pawel
(86) International application number: PCT/PL2011/000139
(87) International publication number: WO 2013/081482

(56) References cited:
- EP-A1- 1 033 638
- DE-A1- 3 006 824
- DE-A1- 19 516 054
- DE-B3-102005 038 068
- GB-A- 2 225 415

## Description

The invention relates to an executive set of head of remotely controlled central heating radiator valve, designed for use on single central heating radiators.

An important element of the remotely controlled - by radio or wire - head is its executive set which applies pressure and moves the needle of the radiator valve. The needle of the valve is pushed away from the valve with considerable force by its internal spring. Depending on the size of the control signal, the executive set changes the amount of the heating medium flowing through the radiator, by moving the needle valve.
A thermostatic cap of central heating radiator valve is known from the patent description 195661 PL. The cap includes an electric drive motor powered by two batteries. The engine through a system of gears causes the first pusher screw to move in relation to the second pusher screw through which it reduces or increases the active length of the regulator mandrel which moves the cone controlling the flow of the heating medium.
The valve element movable is known from the German patent description DE19516054 where its seating is secured to a spindle which is raised and lowered by the stepping motor within the drive unit. The latter is maintained in its operative position by the electromagnet opposing the force of a spring on a plunger. In the event of power failure the electromagnetic is de-energised and the spring drives the valve element on to the seating. For completely electronic control the pressure difference across the seating and possibly the travel of the valve element are detected.
The thermostatically controlled heating valve is known from the European patent description EP1033638, where the position of the valve stage varied to maintain a flow condition by expansion and contraction of a thermostat element that is coupled by a spindle. The set point can be changed by a motor and ring gear actuator. The gear rotates a threaded sleeve to adjust the axial position of the spindle.

The aim of the present invention was to develop a design of an executive set of head of remotely controlled central heating radiator valve of simple construction, an electric micro-engine motor, and a reducer gear of which will transmit only the torque and which will not be subjected to axial pressure.

A head of a remotely controlled central heating radiator valve, the head having a body mounted on the valve, whereas the body contains an electric micro-motor with a reduction gear of high ratio, characterised in that, the inside of the body (1) contains shaped guides (5) between which an electric micro-motor (3) is mounted in a manner allowing it to slide together with the reduction gear(4) and its output shaft (10) is finished with a shift screw (11) screwed freely into the front wall (12) of the body (1) and this shift screw (11) comes into indirect contact with the control needle (13) of the radiator valve (2). The guides are in the form of two columns on which a shaped slider is mounted in a manner allowing it to slide, on which an electric micro-motor with the reduction gear is mounted. The guides have longitudinal blades, which slide into the longitudinal grooves of the slider. The electric micro-motor with the reduction gear is immobilised in the slide by its elastic pawls. On the end of the shift screw there is an intermediate element. The advantage of the solution of the executive set is its simple design with a relatively small number of components. Free sliding of the micro-motor with the gear results in them not being subjected to axial forces, which increases the durability of the power unit.

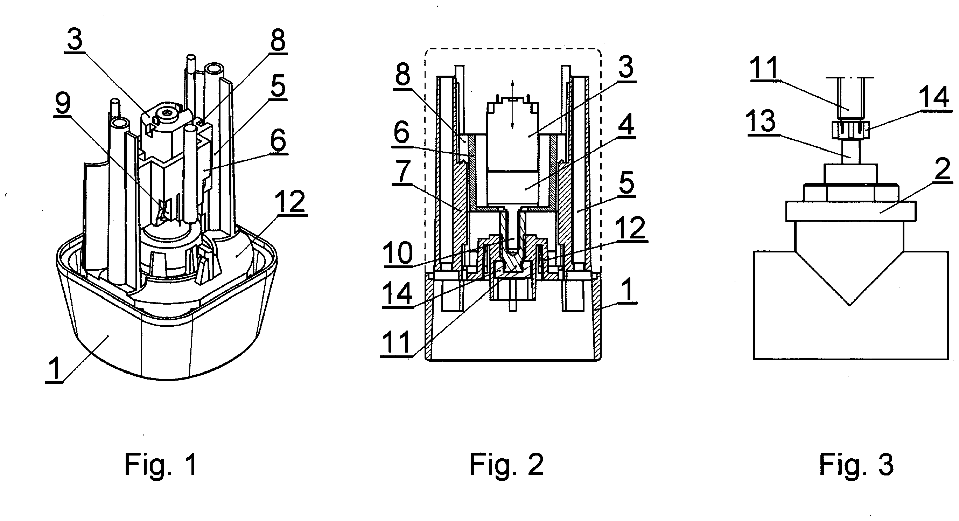

The object of the invention is illustrated in the drawing in which fig. 1 - shows, in an axonometric projection, a view of the executive set with removed cover, fig. 2 - shows a longitudinal cross-section of the executive set and fig. 3 - shows a view of the valve head.

A head of remotely controlled central heating radiator valve in the exemplary embodiment of the present invention has a body 1 in a shape similar to a cuboid, made of plastic, mounted on the valve **2** of the central heating radiator. The body **1** inside includes an electric micro-motor **3** with integrated reduction gear **4** with a high ratio whereby the electric micro-motor itself is powered by two long life batteries. Inside the body **1** there are two parallel, shaped guides **5** in the shape of columns, between which indirectly, through the slider **6** the electric micro-motor **3** with reduction gear **4** is embedded and the slider **6** is mounted on the guides **5** in a manner allowing it to slide. The guides **5** have longitudinal blades **7** which enter in a sliding manner in the longitudinal grooves **8** of the slider **6.** The electric micro-motor **3** with reduction gear **4** is immobilised on the slide **6** with its elastic pawls **9.** The output shaft **10** of the reduction gear **4** is finished with a shift screw **11** screwed freely into the front wall **12** of the body **1** and this shift screw **11** is in indirect contact with a control needle **13** of the valve **2** of the radiator through an intermediate element **14** which is made of plastic with a low friction coefficient, preferably of Teflon. The control needle **13** is pushed away from the valve **2** with its internal spring and is constantly pressed against the shift screw **11** by an intermediate element **14** which eliminates the direct friction between the rotating shift screw **11** and fixed control needle **13** of the valve **2.** Depending on the direction of the electric micro-motor **3** rotation, the shift screw **11** is screwed in or out what forces a change in the position of the control needle **13** of the valve **2** thereby regulating the flow of the heating medium through the radiator. During screwing the shift screw **11** in or out, a move of the slider **6** takes place, together with the micro-motor **3** and reduction gear **4.** The use of freely sliding power unit eliminates harmful axial pressure on the micro-motor **3** bearing and the reduction gear **4** because the micro-motor **3** and the reduction gear **4** transmit only the torque, effect of what is an increased service life and reliability of the valve head **2.**

## Claims

1. A head of a remotely controlled central heating radiator valve, (2) the head having a body (1) mounted on the valve (2), whereas the body (1) contains an electric micro-motor (3) with a reduction gear (4) of high ratio, **characterised in that,** the inside of the body (**1**) contains shaped guides (**5**) between which the electric micro-motor (**3**) is mounted in a manner allowing it to slide together with the reduction gear(4) and its output shaft (**10**) is finished with a shift screw (**11**) screwed freely into the front wall **(12)** of the body (**1**) and this shift screw (**11**) comes into indirect contact with the control needle (**13**) of the radiator valve (2) through an intermediate element (14) made of plastic with a low friction coefficient.

2. A head according to the claim 1, **characterised in that,** the guides (**5**) are in the form of two columns on which a shape slider (**6**) is mounted in a manner allowing it to slide on which an electric micro-motor (**3**) with reduction gear (**4**) is mounted.

3. A head according to the claim 2, **characterised in that,** the guides (**5**) have longitudinal blades (**7**) which enter in a sliding manner in the longitudinal grooves (**8**) of the slider (**6**).

4. A according to the claim 2, **characterised in that,** the electric micro-motor (**3**) with the reduction gear (**4**) is immobilised on the slide (**6**) with its elastic pawls (**9**).

5. A head according to the claim 1, **characterized in that,** on the end of the shift screw **11** an intermediate element **14** is placed.

6. A head according to the claim 1, **characterized in that,** the electric micro-motor (**3**) is integrated with a reduction gear (**4**).

## Patentansprüche

1. Thermostatkopf eines ferngesteuerten Heizkörperventils einer Zentralheizung (2), bei dem der Korpus (1) des Thermostatkopfes am Ventil montiert ist (2) und bei dem der Korpus (1) einen elektrischen Mikromotor (3) mit einem Reduktionsgetriebe (4) mit hoher Untersetzung enthält, **dadurch gekennzeichnet, dass** sich im Inneren des Korpus (1) Profilführungsschienen (5) befinden, zwischen denen ein Mikromotor (3) montiert ist, der den Vorschub zusammen mit dem Reduktionsgetriebe (4) ermöglicht, und seine Ausgangswelle (10) endet mit einer Vorschubschraube (11), die frei in die Vorderwand (12) des Korpus (1) eingedreht ist, und diese Vorschubschraube (11) kommt in indirekten Kontakt mit der Steuernadel (13) des Ventils (2) des Heizkörpers durch ein Zwischenelement (14) aus Kunststoff mit einem niedrigen Reibungskoeffizienten.

2. Thermostatkopf nach Anspruch 1, **dadurch gekennzeichnet**, das die Führungsschienen (5) die Form zweier Säulen haben, an denen zur Ermöglichung des Vorschubs ein Profilschieber (6) montiert ist, an dem ein elektrischer Mikromotor (3) mit Reduktionsgetriebe (4) montiert ist.

3. Thermostatkopf nach Anspruch 2, **dadurch gekennzeichnet, dass** die Führungsschienen (5) längliche Federn (7) haben, welche sich in die Längsnuten (8) des Schiebers (6) schieben.

4. Thermostatkopf nach Anspruch 2, **dadurch gekennzeichnet, dass** der elektrische Mikromotor (3) mit Reduktionsgetriebe (4) im Schieber (6) mit Hilfe von Federsperren (9) arretiert wird.

5. Thermostatkopf nach Anspruch 1, **dadurch gekennzeichnet, dass** sich am Ende der Vorschubschraube (11) ein Zwischenelement befindet (14).

6. Thermostatkopf nach Anspruch 1, **dadurch gekennzeichnet, dass** der elektrische Mikromotor (3) mit dem Reduktionsgetriebe (4) integriert ist.

## Revendications

1. Une tête d'une vanne de radiateur de chauffage central télécommandée (2), où la tête a un corps (1) monté sur la vanne (2), tandis que le corps (1) contient un micromoteur électrique (3) avec un réducteur (4) de rapport élevé, **caractérisé en ce que**, le corps (1) contient à l'intérieur des guides profilés (5), entre lesquels le micromoteur électrique (3)est monté, permettant le coulissement avec le réducteur (4) et son arbre de sortie (10) est terminé par une vis coulissante 11), librement vissée dans la parois frontale (12) du corps (1) et cette vis coulissante (11) entre en contact indirect avec l'aiguille de commande (13) de la vanne (2) de radiateur de chauffage à travers l'élément intermédiaire (14) construit en matière à faible coefficient de frottement.

2. La tête selon la revendication 1, **caractérisée en ce que** les guides (5) sont en forme de deux colonnes sur lesquelles un profilé(6) est monté de manière à permettre le coulissement, sur lequel le micromoteur électrique(3) est monté avec le réducteur (4).

3. La tête selon la revendication 2, **caractérisée en ce que** les guides (5) ont des lames allongées (7), qui glissent dans les rainures longitudinales (8) du coulisseau (6).

4. La tête selon la revendication 2, **caractérisée en ce que** le micromoteur électrique (3) avec le réducteur (4) est immobilisé dans le coulisseau (6) au moyen de verrous élastiques (9).

5. La tête selon la revendication 1, **caractérisée en ce que** l'élément intermédiaire (14) se trouve à l'extrémité de la vis coulissante (11).

6. La tête selon la revendication 1, **caractérisée en ce que** le micromoteur électrique (3) est intégré avec le réducteur (4).
